# EUROPEAN PATENT SPECIFICATION

(11) **EP 3 775 360 B1**
(45) Date of publication and mention of the grant of the patent: **21.02.2024**
(21) Application number: 19726476.5
(22) Date of filing: 25.03.2019
(51) Int. Cl.: D06M 13/46, C11D 3/00

(54) **A PROCESS FOR PREPARING CATIONIC REGENERATED CELLULOSIC FIBERS**
VERFAHREN ZUR HERSTELLUNG VON KATIONISCHEN REGENERIERTEN CELLULOSISCHEN FASERN
PROCÉDÉ DE PRÉPARATION DE FIBRES CELLULOSIQUES RÉGÉNÉRÉES CATIONIQUES

(30) Priority: 26.03.2018 IN 201821011103
(43) Date of publication of application: 17.02.2021
(73) Proprietor: Grasim Industries Limited, Nagda 456 331, Madhya Pradesh (IN)
(72) Inventor: JUIKAR, Vishvajit C, Maharashtra Panvel 410206 (IN); KALITA, Dhrubajyoti, Mumbai 400708 (IN); CHAVAN, Vikas, Maharashtra Panvel 410206 (IN)
(74) Representative: Michalski Hüttermann & Partner Patentanwälte mbB
(86) International application number: PCT/IB2019/052386
(87) International publication number: WO 2019/186352

(56) References cited:
- EP-A2- 0 033 815
- WO-A1-97/48789
- WO-A1-2015/024677
- WO-A1-2015/139865
- DATABASE WPI Week 198904 1989 Thomson Scientific, London, GB; AN 1989-028804 XP002792589, -& JP S63 303182 A (ASAHI CHEM IND CO LTD) 9 December 1988 (1988-12-09)

## Description

### Field of Invention

The present disclosure relates to a process for continuous production of cationic regenerated cellulosic fiber.

### Background

The problem of discolouration of white or coloured fabric by a foreign or extraneous dye during washing is well known in home and industrial laundering. This extraneous dye not only renders the affected fabric unsuitable for further use but also poses a threat to water from laundry wash water and commercial dye houses. The undesirable discoloration during laundering occurs when dye from fabrics which have been dyed with dyes of poor wash fastness dissociates and migrates to wash solution and is absorbed on other fabrics being washed along with. This extraneous dye in the wash solution is commonly referred to as "fugitive" dyes and the dye carry-over from one fabric to another is commonly referred to as "dye transfer".

Various attempts have been made to overcome the problem of dye transfer. Such attempts include avoiding simultaneous washing of clothes of different colours, improving affinity of a dye for the original fabric, use of dye transfer inhibitors to deactivate the leached dye. One approach including use of specifically treated fabrics as colour scavengers or colour-catchers to avoid redeposition of extraneous dyes onto clothes has become more widespread.

For instance, dye catcher sheets have been observed to offer the advantage of attracting and binding leached or extraneous dyes during washing. These dye catcher sheets are made by cationization of fabric with polymeric/monomeric additives and curing. However, as these are manufactured by cationization of fabrics/non-woven sheets, they cause a lot of chemical wastage to manufacturers and have very low dye catching efficiency. This dye catching efficiency is measured as Dye Pick Up (DPU). The DPU is considered as the amount of dye removed from the solution and adsorbed by the treated fiber and is expressed in mg of dye per one gram of the sample fiber/ fabric made from this fiber.

US 4,380,453 discloses use of a textile substrate (fabric or cloth) impregnated with a dye scavenging material such as N-trisubstituted ammonium 2 hydroxy 3 halopropryl compounds or salts of epoxy propyl ammonium compounds such as glycidyltrimethylammonium chloride, for controlling extraneous free flowing dyes or colorants in a liquid bath. US 6,117,191 discloses a method for the production of a dye scavenging substrate in which a cellulosic substrate is coated with an alkaline solution of an N-trisubstituted ammonium 2-hydroxy-3-halopropyl compound, such as glycidyltrimethylammonium chloride. However, such known methods suffer from disadvantages such as unstable reactant, non-uniformity of the coating process, cumbersome process conditions such as high pressures, temperatures and longer reaction times, low efficacy, batch process and requirement of maintaining efficacy over lifetime of the fabric in entire coating process. Particularly, in most of the prior known processes the substrate used for imparting dye scavenging material is either a textile or a non-woven fabric, which lead to non-uniform coating of the dye scavenging material thereby reducing the efficacy.

Document WO 2015/139865 A1 relates to a laundry article, a water-based composition for use in the preparation of the laundry article, and methods of preparing the water-based composition and laundry article. The laundry article comprises: (i) a water-insoluble substrate; and (ii) a dried water-soluble coating provided on the substrate, the dried water-soluble coating comprising: (a) from about 60% to about 95% by weight of at least one surfactant; (b) from about 0.5% to about 5% by weight of at least one enzyme; (c) from about 1 % to about 35% by weight of at least one binder; and (d) from about 0% to about 15% by weight of residual water; the percentages by weight being percentages by weight of the total dried water-soluble coating.

Document WO 2015/024677 A1 describes a method for manufacturing a dye scavenging substrate which comprises the steps of: (a) providing an absorbent substrate; (b) passing the substrate through a bath containing an alkaline solution of a dye scavenging compound selected from: (i) a N-trisubstituted ammonium-2-hydroxy-3-halopropyl compound having the general formula (I), or (ii) a salt of epoxy propyl ammonium having the general formula (II), or a combination thereof; (c) subjecting the substrate to a pressure of from about 0.04 MPa to about 0.40 MPa; (d) wrapping the substrate in a water impermeable material and rotating the substrate for a period of from about 12 hours to about 60 hours; (e) removing the water impermeable material and passing the substrate through a bath containing an acid solution; (f) subjecting the substrate to a pressure of from about 0.15 MPa to about 0.40 MPa; and (g) drying the substrate.

Thus, there is a need for an improved process of manufacturing cellulosic fibers which have high affinity towards dyes, while simultaneously avoiding disadvantages associated with the prior art processes.

### Summary

The invention is defined by the features of the independent claims.

A process for continuous production of a cationic regenerated cellulosic fiber is disclosed. Said process comprises the steps of:
(a) providing a wet regenerated cellulosic fiber;
(b) treating said regenerated cellulosic fiber with an alkaline solution of 3-halo-2-hydroxyalkyl-N,N,N-tri-alkyl or aryl substituted ammonium compound having the general formula I, or a salt thereof while maintaining a pH of around 9-13: 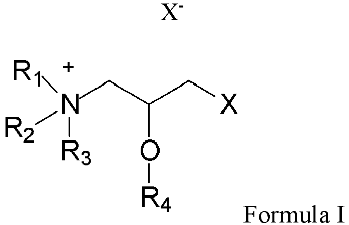 wherein
   X is a halogen selected from a group consisting of chloride and bromide;
   R1, R2, R3, are individually selected from a group consisting of C1-C4 alkyl, benzyl and substituted benzyl groups; and
   R4 is hydrogen;
(c) subjecting the treated regenerated cellulosic fiber to a moisture regulating step such that the moisture content in the treated cellulosic fiber is not more than 120% of weight of the treated cellulosic fiber; and
(d) curing the treated cellulosic fiber at a temperature ranging between 100° C and 145° C, to obtain regenerated cellulosic fiber which is cationically modified by 3-halo-2-hydroxyalkyl-N,N,N-tri-alkyl or aryl substituted ammonium compound having formula I, or a salt thereof in an amount ranging between 1.5 to 33 % by weight of the cellulosic fiber.

A cationic regenerated cellulosic fiber is disclosed. Said cationic regenerated cellulosic fiber comprises regenerated cellulosic fiber cationically modified by 1.5 to 33 % by weight of 3-halo-2-hydroxyalkyl-N,N,N-tri-alkyl or aryl substituted ammonium compound having formula I, or a salt thereof: 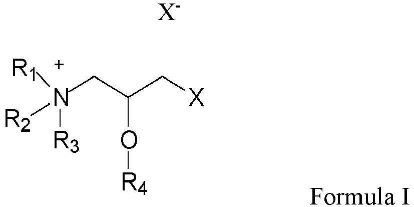 wherein
X is a halogen selected from a group consisting of chloride and bromide;
R1, R2, R3, are individually selected from a group consisting of C1-C4 alkyl, benzyl and substituted benzyl groups; and
R4 is hydrogen.

### Detailed Description

For the purpose of promoting an understanding of the principles of the disclosure, reference will now be made to embodiments and specific language will be used to describe the same. It will nevertheless be understood that no limitation of the scope of the disclosure is thereby intended, such alterations and further modifications in the disclosed composition and method, and such further applications of the principles of the disclosure therein being contemplated as would normally occur to one skilled in the art to which the disclosure relates.

It will be understood by those skilled in the art that the foregoing general description and the following detailed description are exemplary and explanatory of the disclosure and are not intended to be restrictive thereof.

Reference throughout this specification to "one embodiment" "an embodiment" or similar language means that a particular feature, structure, or characteristic described in connection with the embodiment is included in at least one embodiment of the present disclosure. Thus, appearances of the phrase "in one embodiment", "in an embodiment" and similar language throughout this specification may, but do not necessarily, all refer to the same embodiment.

In its broadest scope, the present disclosure relates to a process for continuous production of cationic regenerated cellulosic fiber. In particular, the present disclosure relates to a process for continuous production of cationic regenerated cellulosic fiber comprising the steps of:
(a) providing a wet regenerated cellulosic fiber;
(b) treating said regenerated cellulosic fiber with an alkaline solution of 3-halo-2-hydroxyalkyl-N,N,N-tri-alkyl or aryl substituted ammonium compound having the general formula I, or a salt thereof while maintaining a pH of around 9-13: 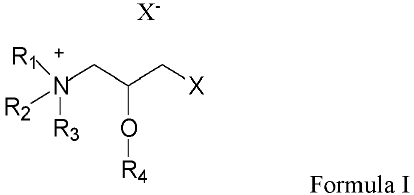 wherein
   X is a halogen selected from a group consisting of chloride and bromide;
   R1, R2, R3, are individually selected from a group consisting of C1-C4 alkyl, benzyl and substituted benzyl groups; and
   R4 is hydrogen;
(c) subjecting the treated regenerated cellulosic fiber to a moisture regulating step such that the moisture content in the treated cellulosic fiber is not more than 120% of weight of the treated regenerated cellulosic fiber; and
(d) curing the treated regenerated cellulosic fiber to a temperature ranging between 100° C and 145° C.

The resultant cationic regenerated cellulosic fiber comprises regenerated cellulosic fiber cationically modified by 3-halo-2-hydroxyalkyl-N,N,N-tri-alkyl or aryl substituted ammonium compound having formula I, or a salt thereof in an amount ranging between about 1.5 to 33 % by weight of the cellulosic fiber, more preferably about13 to 26% by weight of cellulosic fiber and most preferably about 16.25 to 24.7% by weight of cellulosic fiber. Such cationic regenerated cellulosic fiber has the ability to absorb a very high amount of direct dyes or reactive dyes. Thus, said cationic regenerated cellulosic fiber is suitable for manufacturing of fugitive dye absorbing fiber and article. Said fugitive dye absorbing fiber has a DPU ranging between 2 -50 mg/g (mg of dye absorbed by one gram of fiber).

The present process results in improving the dyeability and dyeing fastness of the regenerated cellulosic fiber with direct dyes, reactive dyes and the like.

In accordance with an embodiment, said 3-halo-2-hydroxyalkyl-N,N,N-tri-alkyl or aryl substituted ammonium compound is selected from a group consisting of 3- chloro-2-hydroxypropyl trimethylammonium chloride, 3- chloro-2-hydroxypropyl-N,N,N-trimethylammonium bromide, 3- chloro-2-hydroxypropyl-N,N,-diethyl-N-methylammonium chloride, 3- chloro-2-hydroxypropyl-N,N,-dimethyl-N-benzylammonium chloride and mixtures thereof. In accordance with a preferred embodiment, said 3-halo-2-hydroxyalkyl-N,N,N-tri-alkyl or aryl substituted ammonium compound is 3- chloro-2-hydroxypropyl trimethylammonium chloride.

In accordance with an embodiment, said alkaline solution of 3-halo-2-hydroxyalkyl-N,N,N-tri-alkyl or aryl substituted ammonium compound is applied to the wet cellulosic fiber in an amount ranging from 15 - 30 % by weight of the cellulosic fiber, and preferably from about 18 to 25 % by weight of the cellulosic fiber.

In accordance with an embodiment, said alkaline solution of 3-halo-2-hydroxyalkyl-N,N,N-tri-alkyl or aryl substituted ammonium compound has a concentration of 3-halo-2-hydroxyalkyl-N,N,N-tri-alkyl or aryl substituted ammonium compound ranging between 13 to 26 %, and preferably 16.25 to 24.7%.

In accordance with an embodiment, the alkaline solution has a concentration of from 3.25 to 6.5%. Said alkaline solution comprises a base selected from a group consisting of sodium hydroxide, potassium hydroxide, sodium carbonate, and preferably sodium hydroxide or potassium hydroxide.

In accordance with an embodiment, the alkaline solution 3-halo-2-hydroxyalkyl-N,N,N-tri-alkyl or aryl substituted ammonium compound is maintained at a temperature between about 10 to 50° C, and preferably between about 20 to 40° C. In accordance with an embodiment, the cellulosic fiber is treated with the alkaline solution of 3-halo-2-hydroxyalkyl-N,N,N-tri-alkyl or aryl substituted ammonium compound for a time period of less than 10 minutes.

In accordance with an embodiment, dye pick up of the regenerated cellulosic fiber can be improved by varying the degree of cationization. The degree of cationization can be varied by by varying at least one of pH, temperature of curing, concentration of chemical and time of curing.

In accordance with an embodiment, curing of the treated regenerated cellulosic fiber is carried out at a temperature ranging between 100° C and 145° C, and preferably between 110° C and 135° C.

In accordance with an embodiment, the moisture regulating step comprises of any known method of altering the moisture content of cellulosic fiber. In accordance with an exemplary embodiment, the moisture content of cellulosic fiber is regulated by dewatering the regenerated cellulosic fiber by passing the regenerated cellulosic fiber between a pair of rollers.

In accordance with an embodiment, the wet regenerated cellulosic fiber is a never-dried regenerated cellulosic fiber obtained from standard viscose manufacturing process. The present disclosure also provides a process for preparing cationic regenerated cellulosic fibers from a cellulosic solution through a viscose process. Said process comprises the steps of:
(a) spinning a cellulosic solution through a spinneret into a regeneration bath to obtain regenerated cellulosic fibers;
(b) washing the regenerated cellulosic fibers to obtain never dried regenerated cellulosic fiber;
(c) treating the never dried regenerated cellulosic fibers with an alkaline solution of 3-halo-2-hydroxyalkyl-N,N,N-tri-alkyl or aryl substituted ammonium compound having the general formula I, or a salt thereof 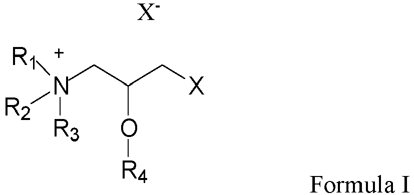 wherein
   X is a halogen selected from a group consisting of chloride and bromide;
   R1, R2, R3, are individually selected from a group consisting of C1-C4 alkyl, benzyl and substituted benzyl groups; and
   R4 is hydrogen; and
(d) curing the resultant fibers to obtain cationic regenerated cellulosic fibers.

In accordance with an embodiment, said regenerated cellulosic fibers are selected from viscose or modal or lyocell. These fibers are prepared either by viscose process or solvent spun process.The viscose was prepared by treatment of pulp sheets (high alpha cellulose, viscose grade pulp) with caustic soda followed by shredding thereo in alkali cellulose, xanthating the alkali cellulose and dissolving it in a caustic soda solution. The viscose was then aged and spun by extrusion through orifices into a spinning bath containing sulfuric acid, sodium sulfate and zinc sulfate. The spinning bath was maintained at a temperature of 30-50° C. The filaments were withdrawn from the bath and passed over a first and second godets, and were then collected. After collecting the filaments, they were washed, desulfurized and bleached by conventional treatments. Similarly, regenerated cellulosic fibers can also be obtained from standard Lyocell process i.e. solvent spun process.

In accordance with an embodiment, the wet regenerated cellulosic fiber is obtained by re-wetting dried regenerated cellulosic fibers.

In accordance with an embodiement, the wet regenerated cellulosic fiber is laid on moving bed.

An absorbent article comprising said cationic regenerated cellulosic fiber is also disclosed. Said absorbent article comprises about 1 to 100% of said cationic regenerated cellulosic fiber. Said absorbent article includes but is not limited to fugitive dye absorbing articles, or wovens or non-wovens, sheets, powder, filters and the like.

### Specific Embodiments are Decribed Below

A process for continuous production of a cationic regenerated cellulosic fiber, said process comprising the steps of:
(a) providing a wet regenerated cellulosic fiber;
(b) treating said regenerated cellulosic fiber with an alkaline solution of 3-halo-2-hydroxyalkyl-N,N,N-tri-alkyl or aryl substituted ammonium compound having the general formula I, or a salt thereof while maintaining a pH of around 9-13: 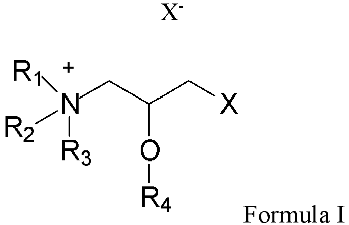 wherein
   X is a halogen selected from a group consisting of chloride and bromide;
   R1, R2, R3, are individually selected from a group consisting of C1-C4 alkyl, benzyl and substituted benzyl groups; and
   R4 is hydrogen;
(c) subjecting the treated regenerated cellulosic fiber to a moisture regulating step such that the moisture content in the treated cellulosic fiber is not more than 120% of weight of the treated cellulosic fiber; and
(d) curing the treated cellulosic fiber at a temperature ranging between 100° C and 145° C, to obtain regenerated cellulosic fiber which is cationically modified by 3-haloalkyl-2-hydroxy-N-tri-alkyl or aryl substituted ammonium compound having formula I, or a salt thereof in an amount ranging between 1.5-33% by weight.

Such process, wherein 3-halo-2-hydroxyalkyl-N,N,N-tri-alkyl or aryl substituted ammonium compound is selected from a group consisting of 3- chloro-2-hydroxypropyl trimethylammonium chloride, 3- chloro-2-hydroxypropyl-N,N,N-trimethylammonium bromide, 3- chloro-2-hydroxypropyl-N,N,-diethyl-N-methylammonium chloride, 3-chloro-2-hydroxypropyl-N,N,-dimethyl-N-benzylammonium chloride and mixtures thereof.

Such process, wherein 3-halo-2-hydroxyalkyl-N,N,N-tri-alkyl or aryl substituted ammonium compound is 3- chloro-2-hydroxypropyl trimethylammonium chloride.

Such process, wherein said alkaline solution of 3-halo-2-hydroxyalkyl-N,N,N-trialkyl or aryl substituted ammonium compound is applied to the wet regenerated cellulosic fiber in an amount ranging from 15 - 30 % by weight of the cellulosic fiber.

Such process, wherein said alkaline solution of 3-halo-2-hydroxyalkyl-N,N,N-trialkyl or aryl substituted ammonium compound has a concentration of 3-haloalkyl-2-hydroxy-N-trialkyl substituted ammonium compound ranging between 13 to 26%.

Such process, wherein said alkaline solution comprises a base selected from a group consisting of sodium hydroxide, potassium hydroxide and sodium carbonate.

Such process, wherein the alkaline solution of 3-halo-2-hydroxyalkyl-N,N,N-trialkyl or aryl substituted ammonium compound is maintained at a temperature of between about 10 to 50° C.

Such process, wherein the wet regenerated cellulosic fiber is treated with the alkaline solution of 3-halo-2-hydroxyalkyl-N,N,N-tri-alkyl or aryl substituted ammonium compound for a time period of less than 10 minutes.

Such process, wherein curing of the treated regenerated cellulosic fiber is carried out at a temperature ranging between 110-135 ° C.

Such process, wherein the wet regenerated cellulosic fiber is a never-dried regenerated cellulosic fiber obtained by spinning a cellulosic solution through spinneret into a regeneration bath and washing the regenerated cellulosic fiber.

Such process, wherein the wet regenerated cellulosic fiber is obtained by re-wetting dried regenerated cellulosic fibers.

Such process, wherein the wet regenerated cellulosic fiber is selected from a group consisting of viscose staple fiber, modal fiber, lyocell fiber and mixtures thereof.

Such process, wherein the wet regenerated cellulosic fiber is laid on moving bed.

A cationic regenerated cellulosic fiber comprising regenerated cellulosic fiber cationically modified by 1.5 to 33 % by weight of 3-halo-2-hydroxyalkyl-N,N,N-tri-alkyl or aryl substituted ammonium compound having formula I, or a salt thereof: 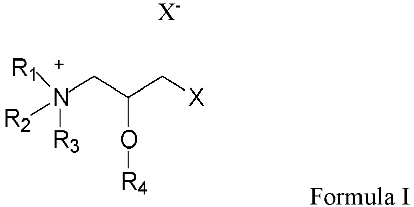 wherein
X is a halogen selected from a group consisting of chloride and bromide;
R1, R2, R3, are individually selected from a group consisting of C1-C4 alkyl, benzyl and substituted benzyl groups; and
R4 is hydrogen.

Such cationic regenerated cellulosic fiber, wherein 3-halo-2-hydroxyalkyl-N,N,N-tri-alkyl or aryl substituted ammonium compound is selected from a group consisting of 3- chloro-2-hydroxypropyl trimethylammonium chloride, 3- chloro-2-hydroxypropyl-N,N,N-trimethylammonium bromide, 3- chloro-2-hydroxypropyl-N,N,-diethyl-N-methylammonium chloride, 3- chloro-2-hydroxypropyl-N,N,-dimethyl-N-benzylammonium chloride and mixtures thereof.

Such cationic regenerated cellulosic fiber, wherein 3-halo-2-hydroxyalkyl-N,N,N-tri-alkyl or aryl substituted ammonium compound is 3- chloro-2-hydroxypropyl trimethylammonium chloride.

An absorbent article comprising said cationic regenerated cellulosic fiber.

### Examples

### Example 1: Preparation of fugitive dye absorbing fiber

Preparation: Never dried regenerated cellulosic fiber with ~90-120% moisture was used. An alkaline solution of 3-chloro-2-hydroxypropyl-N,N,N-trimethylammonium chloride (CHPTAC) is prepared at various concentrations at 25- 30⁰C and poured/sprayed/applied from above to a moving bed of wet fiber with continuous recirculation. The fiber bed is squeezed to 70-120% moisture content before drying at 120-145⁰C, to obtain disclosed fugitive dye absorbing fiber.

### Measurement of effectiveness:

### Method A: Visual method

Visual method was a quick screening method to ascertain the affinity of the fibers towards direct dyes, where a comparative rating is attributed to the remaining dye in a solution in a scale of 0-100. Briefly, 180 mg of Saiamine LF sky Blue FH dye was dissolved in 1 litre of hot water (at 40±1 °C) to obtain a dye bath with concentration of 180 mg/L. Different standards were made as represented in the Table 1. For the test, 1.0 gram of fiber was dipped in 140 mL of dye bath (containing 25.2 mg of dye) at 40°C, by continuous stirring manually. At the end of 1 minute, the colored fiber is removed from dye bath and the solution filtered using nylon filter to remove suspended fiber. Table 1 shows the method of preparation of DPU standards (by mixing test solution and DM water at specific ratios) for a quick comparison of tested solution with different standards. Tested solution after filtration is compared against the closest match of the standard and assigned a DPU value.

**Table 1**

| DPU standard | DPU standard (% DPU) | Test solution of 180mg/L (mL) | DM water (mL) |
|---|---|---|---|
| Satndard 1 | 100 | 0 | 50 |
| Satndard 2 | 98 | 1 | 49 |
| Standard 3 | 95 | 2.5 | 47.5 |
| Standard 4 | 92 | 4 | 46 |
| Standard 5 | 88 | 6 | 44 |
| Standard 6 | 84 | 8 | 42 |
| Standard 7 | 80 | 10 | 40 |
| Standard 8 | 75 | 12.5 | 37.5 |
| Standard 9 | 70 | 15 | 35 |
| Standard 10 | 60 | 20 | 30 |
| Standard 11 | 50 | 25 | 25 |

### Method B: Spectroscopic method

Spectrophotometric determination of remaining dye in the dye bath is more accurate method as compared to visual method to quantify the dye uptake. A dye bath of a Direct red F3B 150% Dye is prepared by diluting 50 mg of dye in 1L of water to receive a dye bath with a concentration of 50 mg/L. The fugitive dye absorbing sheet! fiber is placed in 750 ml of the above mentioned dye bath at 40±1 °C in a glass beaker under continuous constant agitation and constant temperature. After every minute, an aliquot of dye solution was removed, and the effectiveness of prepared fugitive dye absorbing sheet was tested by measuring the dye concentration in the residual liquor by UV-Vis spectrophotometry at 538nm. Calibration curve was generated in the range of 1-50 mg/L concentration of the dye.

### Method C: Kjeldahl nitrogen analysis

This method determines the nitrogen contents in organic and inorganic substances. The amount of dye uptake by the fibers is a direct measurement of its effectiveness, which also has a direct correlation with the covalently bound nitrogen. Fiber/Chemical digested and analyzed by standard Kjeldahl instrument. (Reference: Kjeldahl, J. (1883) "Neue Methode zur Bestimmung des Stickstoffs in organischen Körpern" (New method for the determination of nitrogen in organic substances), Zeitschrift für analytische Chemie, 22 (1) : 366-383.)

Table 2 shows a comparison between the DPU of the fugitive dye absorbing fiber, at various concentrations of CHPTAC and using Method A and Method B.

**Table 2**

| **S. No.** | CHPTAC (%) | DPU (Method A) | DPU (Method B) |
|---|---|---|---|
| 1 | 33.0 | 99-100 | 45.7 |
| 2 | 26.0 | 98 | 36.7 |
| 3 | 22.8 | 96 | 32.0 |
| 4 | 16.3 | 90 | 22.3 |
| 5 | 9.8 | <70 | 13.1 |
| 6 | 6.5 | <60 | 10.0 |
| 7 | 4.0 | <50 | 7.0 |
| 8 | 1.6 | <50 | 2.9 |

| | | | |
|---|---|---|---|
| NT: Not tested | | | |

The performance of a fugitive dye absorbing sheet/fiber sheet in accordance with an embodiment of the present invention was also evaluated by comparing it with commercially available colour-catcher articles having same weight of fiber. Table 3 shows a comparative summary of DPU of commercially available color catcher products that comprises of mixture of cellulosic fibers or pulp and/or synthetic fibers (COMP-1 and COMP-2) and disclosed fugitive dye absorbing sheet/ fibers, (DC VSF - Dye Catcher VSF having varying percentages of CHPTAC) using Method B.

**Table 3**

| S. No. | Fabric detail | DPU (mg/g of fiber/ fabric) at 3 minutes |
|---|---|---|
| 1 | COMP-1 | 25 |
| 2 | COMP-2 | 18.9 |
| 3 | DCVSF 1 (13.0 - 16.25%) | 22.3 |
| 4 | DCVSF 2 (19.5 - 22.8%) | 32.0 |
| 5 | DCVSF 3 (24.7 - 26%) | 36.7 |

The below examples show the % reaction completion upon varying the curing temperature, time of curing (under controlled alkaline pH of 10-12), and pH and concentration of CHPTAC.

### Example 2: Table 4 shows the % reaction completion (determined by Method C) vs temp. of curing for 9.8 % of CHPTAC; Curing time: 10 minutes; pH 10.

**Table 4**

| S. No. | Curing temp. (°C) | % reaction completion |
|---|---|---|
| 1 | 100 | 20.90 |
| 2 | 120 | 44.78 |
| 3 | 130 | 46.27 |
| 4 | 140 | 47.76 |

### Example 3: Table 5 shows the % reaction completion (as determined by Method C) vs time of curing at 120 °C for 13.0% of CHPTAC; Constant pH 10.

**Table 5**

| S. No. | Curing time (Min) | % reaction completion |
|---|---|---|
| 1 | 10 | 26.32 |
| 2 | 20 | 35.11 |
| 3 | 30 | 38.30 |
| 4 | 120 | 50.00 |
| 5 | 300 | 51.06 |

### Example 4: Table 6 shows the % reaction completion (as determined by Method C) vs pH and concentration of CHPTAC (%) solution at 120 °C; Curing time: 10 minutes.

**Table 6**

| S. No. | CHPTAC concentration (%) | pH (with NaOH) | % reaction completion |
|---|---|---|---|
| 1A | 6.5 | 10 | 27.12 |
| 1B | 6.5 | 13 | 37.74 |
| 2A | 13.0 | 10 | 26.47 |
| 2B | 13.0 | 13 | 29.41 |
| 3A | 19.5 | 10 | 22.86 |
| 3B | 19.5 | 13 | 29.86 |

### Industrial Applicability

The disclosed process of preparing cationic regenerated cellulosic fiber is a continuous process and is simple and inexpensive to perform. The chemicals used in the present process are registered under REACH (Registration, Evaluation, Authorisation and Restriction of Chemicals) and hence disclosed process is an eco-friendly process.

The disclosed process performs the cationization of the cellulosic fiber at the wet stage. This provides advantage of uniform application of dye absorbing compound on the regenerated cellulosic fiber, accessibility to convert the fiber to cationic yarn, multiple dye catcher non-woven variants, lower effluent generation in commercial dye houses, and avoiding interference of residual chemicals as in post coating process. Further, efficacy is retained after downstream non-woven processes like spunlacing and melt bonding and also during conversion of fiber to yarn and then to fabric or textile.

The resultant cationic regenerated cellulosic fiber is suitable to make fugitive dye absorbing regenerated cellulosic fiber and articles. Said fugitive dye absorbing regenerated cellulosic fiber is suitable to make non-woven fabric (fugitive dye absorbing sheets) or textiles for use in commercial and domestic laundry houses for the purpose of removing undesirable extraneous dyes from the laundry wash water thus eliminating undesirable discolouration of other clothes. The present process also enables obtaining fugitive dye absorbing articles comprising blended cellulosic fiber with fibers like Polyester, Polylacticacid(PLA), Polypropylene (PP), Lyocel, and cotton.

The cationic regenerated cellulosic fiber of the present disclosure can also be used with direct and reactive dyes. Said cationic regenerated cellulosic fiber requires a salt free dyeing process.

## Claims

1. A process for continuous production of a cationic regenerated cellulosic fiber, said process comprising the steps of:
(a) providing a wet regenerated cellulosic fiber;
(b) treating said regenerated cellulosic fiber with an alkaline solution of 3-halo-2-hydroxyalkyl-N,N,N-tri-alkyl or aryl substituted ammonium compound having the general formula I, or a salt thereof while maintaining a pH of around 9-13: 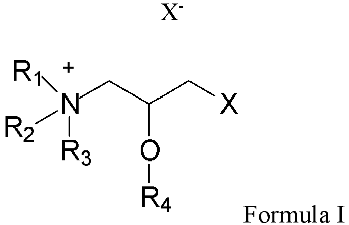 wherein
X is a halogen selected from a group consisting of chloride and bromide;
R1, R2, R3, are individually selected from a group consisting of C1-C4 alkyl, benzyl and substituted benzyl groups; and
R4 is hydrogen;
(c) subjecting the treated regenerated cellulosic fiber to a moisture regulating step such that the moisture content in the treated cellulosic fiber is not more than 120% of weight of the treated cellulosic fiber; and
(d) curing the treated cellulosic fiber at a temperature ranging between 100° C and 145° C, to obtain regenerated cellulosic fiber which is cationically modified by 3-halo-2-hydroxyalkyl-N,N,N-tri-alkyl or aryl substituted ammonium compound having formula I, or a salt thereof in an amount ranging between 1.5 to 33 % by weight.

2. The process as claimed in claim 1, wherein 3-halo-2-hydroxyalkyl-N,N,N-tri-alkyl or aryl substituted ammonium compound is selected from a group consisting of 3-chloro-2-hydroxypropyl trimethylammonium chloride, 3- chloro-2-hydroxypropyl-N,N,N-trimethylammonium bromide, 3- chloro-2-hydroxypropyl-N,N,-diethyl-N-methylammonium chloride, 3- chloro-2-hydroxypropyl-N,N,-dimethyl-N-benzylammonium chloride and mixtures thereof.

3. The process as claimed in claim 2, wherein 3-halo-2-hydroxyalkyl-N,N,N-tri-alkyl or aryl substituted ammonium compound is 3- chloro-2-hydroxypropyl trimethylammonium chloride.

4. The process according to any one of the previous claims, wherein said alkaline solution of 3-halo-2-hydroxyalkyl-N,N,N-tri-alkyl or aryl substituted ammonium compound is applied to the wet regenerated cellulosic fiber in an amount ranging from about 15 to 30 % by weight of the cellulosic fiber.

5. The process according to any one of the previous claims, wherein said alkaline solution of 3-halo-2-hydroxyalkyl-N,N,N-tri-alkyl or aryl substituted ammonium compound has a concentration of 3-halo-2-hydroxyalkyl-N,N,N-tri-alkyl or aryl substituted ammonium compound ranging between about 13 to 26%.

6. The process according to any one of the previous claims, wherein said alkaline solution comprises a base selected from a group consisting of sodium hydroxide, potassium hydroxide and sodium carbonate.

7. The process according to any one of the previous claims, wherein the alkaline solution of 3-halo-2-hydroxyalkyl-N,N,N-tri-alkyl or aryl substituted ammonium compound is maintained at a temperature between about 10 to 50° C.

8. The process according to any one of the previous claims, wherein the wet regenerated cellulosic fiber is treated with the alkaline solution of 3-halo-2-hydroxyalkyl-N,N,N-tri-alkyl or aryl substituted ammonium compound for a time period of less than 10 minutes.

9. The process according to any one of the previous claims, wherein curing of the treated regenerated cellulosic fiber is carried out at a temperature ranging between about 110-135 ° C.

10. The process according to any one of the previous claims, wherein the wet regenerated cellulosic fiber is a never-dried regenerated cellulosic fiber obtained by spinning a cellulosic solution through a spinneret into a regeneration bath and washing the regenerated cellulosic fiber.

11. The process according to any one of the previous claims, wherein the wet regenerated cellulosic fiber is obtained by re-wetting a dried regenerated cellulosic fiber.

12. The process according to any one of the previous claims, wherein the wet regenerated cellulosic fiber is selected from a group consisting of viscose staple fiber, modal fiber, lyocell fiber and mixtures thereof and/or the wet regenerated cellulosic fiber is laid on moving bed.

13. A cationic regenerated cellulosic fiber comprising regenerated cellulosic fiber cationically modified by 1.5 to 33 % by weight of 3-halo-2-hydroxyalkyl-N,N,N-tri-alkyl or aryl substituted ammonium compound having formula I, or a salt thereof: 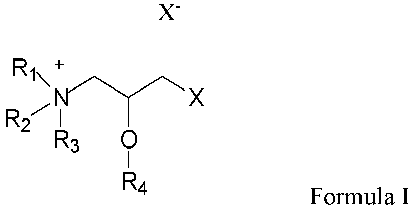 wherein
X is a halogen selected from a group consisting of chloride and bromide;
R1, R2, R3, are individually selected from a group consisting of C1-C4 alkyl, benzyl and substituted benzyl groups; and
R4 is hydrogen.

14. The cationic regenerated cellulosic fiber as claimed in claim 14, wherein 3-halo-2-hydroxyalkyl-N,N,N-tri-alkyl or aryl substituted ammonium compound is selected from a group consisting of 3- chloro-2-hydroxypropyl trimethylammonium chloride, 3- chloro-2-hydroxypropyl-N,N,N-trimethylammonium bromide, 3-chloro-2-hydroxypropyl-N,N,-diethyl-N-methylammonium chloride, 3- chloro-2-hydroxypropyl-N,N,-dimethyl-N-benzylammonium chloride and mixtures thereof.

15. The cationic regenerated cellulosic fiber as claimed in claim 14, wherein 3-halo-2-hydroxyalkyl-N,N,N-tri-alkyl or aryl substituted ammonium compound is 3-chloro-2-hydroxypropyl trimethylammonium chloride.

## Patentansprüche

1. Verfahren zum kontinuierlichen Herstellen einer kationischen Celluloseregeneratfaser, wobei das Verfahren die Schritte aufweist:
(a) Bereitstellen einer nassen Celluloseregeneratfaser;
(b) Behandeln der Celluloseregeneratfaser mit einer alkalischen Lösung einer 3-Halogen-2-hydroxyalkyl-N,N,N-tri-alkyl- oder Aryl-substituierten Ammoniumverbindung der allgemeinen Formel I oder eines Salzes davon unter Beibehaltung eines pH-Werts von etwa 9 - 13: 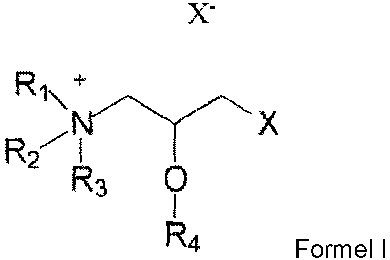 wobei
X ein Halogen ist, das ausgewählt ist aus einer Gruppe bestehend aus Chlorid und Bromid;
R1, R2, R3 einzeln ausgewählt sind aus einer Gruppe bestehend aus C1-C4-Alkyl, Benzyl und substituierten Benzylgruppen; und
R4 Wasserstoff ist;
(c) Unterziehen der behandelten Celluloseregeneratfaser einem Feuchtigkeitsregulierungsschritt, so dass der Feuchtigkeitsgehalt in der behandelten Cellulosefaser nicht mehr als 120 Gew.-% der behandelten Cellulosefaser beträgt; und
(d) Aushärten der behandelten Cellulosefaser bei einer Temperatur im Bereich zwischen 100°C und 145°C zum Erhalten einer Celluloseregeneratfaser, die kationisch modifiziert ist durch eine 3-Halogen-2-hydroxyalkyl-N,N,N-tri-alkyl- oder Aryl-substituierte Ammoniumverbindung der Formel I oder ein Salz davon in einer Menge im Bereich zwischen 1,5 bis 33 Gew.-%.

2. Verfahren nach Anspruch 1, wobei die 3-Halogen-2-hydroxyalkyl-N,N,N-trialkyl- oder Aryl-substituierte Ammoniumverbindung ausgewählt ist aus der Gruppe bestehend aus 3-Chlor-2-hydroxypropyltrimethylammoniumchlorid, 3-Chlor-2-hydroxypropyl-N,N,N-trimethylammoniumbromid, 3-Chlor-2-hydroxypropyl-N,N,-diethyl-N5-methylammoniumchlorid, 3-Chlor-2-hydroxypropyl-N,N,-dimethyl-N-Benzylammoniumchlorid und Mischungen davon.

3. Verfahren nach Anspruch 2, wobei die 3-Halogen-2-hydroxyalkyl-N,N,N-trialkyl- oder Aryl-substituierte Ammoniumverbindung 3-Chlor-2-hydroxypro-pyltrimethylammoniumchlorid ist.

4. Verfahren nach einem der vorhergehenden Ansprüche, wobei die alkalische Lösung der 3-Halogen-2-hydroxyalkyl-N,N,N-tri-alkyl- oder Aryl-substituierten Ammoniumverbindung auf die nasse Celluloseregeneratfaser in einer Menge im Bereich von etwa 15 bis 30 Gew.-% der Cellulosefaser aufgebracht wird.

5. Verfahren nach einem der vorhergehenden Ansprüche, wobei die alkalische Lösung der 3-Halogen-2-hydroxyalkyl-N,N,N-tri-alkyl- oder Aryl-substituierten Ammoniumverbindung eine Konzentration der 3-Halogen-2-hydroxyalkyl-N,N,N-tri-alkyl- oder Aryl-substituierten Ammoniumverbindung im Bereich von etwa 13 bis 26% aufweist.

6. Verfahren nach einem der vorhergehenden Ansprüche, wobei die alkalische Lösung eine Base enthält, die ausgewählt ist aus einer Gruppe bestehend aus Natriumhydroxid, Kaliumhydroxid und Natriumcarbonat.

7. Verfahren nach einem der vorhergehenden Ansprüche, wobei die alkalische Lösung der 3-Halogen-2-hydroxyalkyl-N,N,N-tri-alkyl- oder Aryl-substituierten Ammoniumverbindung bei einer Temperatur zwischen etwa 10 und 50°C gehalten wird.

8. Verfahren nach einem der vorhergehenden Ansprüche, wobei die nasse Celluloseregeneratfaser für eine Zeitdauer von weniger als 10 Minuten mit der alkalischen Lösung der 3-Halogen-2-hydroxyalkyl-N,N,N,N-tri-alkyl- oder Aryl-substituierten Ammoniumverbindung behandelt wird.

9. Verfahren nach einem der vorhergehenden Ansprüche, wobei das Aushärten der behandelten Celluloseregeneratfaser bei einer Temperatur im Bereich von etwa 110 bis 135°C ausgeführt wird.

10. Verfahren nach einem der vorhergehenden Ansprüche, wobei die nasse Celluloseregeneratfaser eine nie getrocknete Celluloseregeneratfaser ist, die durch Spinnen einer Celluloselösung durch eine Spinndüse in ein Regenerationsbad und Waschen der Celluloseregeneratfaser erhalten wird.

11. Verfahren nach einem der vorhergehenden Ansprüche, wobei die nasse Celluloseregeneratfaser durch Wiederbefeuchten einer getrockneten Celluloseregeneratfaser erhalten wird.

12. Verfahren nach einem der vorhergehenden Ansprüche, wobei die nasse Celluloseregeneratfaser ausgewählt ist aus einer Gruppe bestehend aus Viskosestapelfaser, Modal-Faser, Lyocell-Faser und Mischungen davon, und/oder wobei die nasse Celluloseregeneratfaser auf ein bewegtes Bett gelegt wird.

13. Kationische Celluloseregeneratfaser mit Celluloseregeneratfasern, die mit 1,5 bis 33 Gew.-% einer 3-Halogen-2-hydroxyalkyl-N,N,Ntri-alkyl- oder Aryl-substituierten Ammoniumverbindung der Formel I oder einem Salz davon kationisch modifiziert sind: 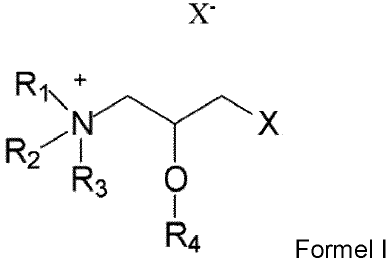 wobei
X ein Halogen ist, das ausgewählt ist aus einer Gruppe bestehend aus Chlorid und Bromid;
R1, R2, R3 einzeln ausgewählt sind aus einer Gruppe bestehend aus C1-C4-Alkyl, Benzyl und substituierten Benzylgruppen; und
R4 Wasserstoff ist.

14. Kationische Celluloseregeneratfaser nach Anspruch 14, wobei die 3-Halogen-2-hydroxyalkyl-N,N,N-tri-alkyl- oder Aryl-substituierte Ammoniumverbindung ausgewählt ist aus der Gruppe bestehend aus 3-Chlor-2-hydroxypropyltrimethylammoniumchlorid, 3-Chlor-2-hydroxypropyl-N,N,N-trimethylammoniumbromid, 3-Chlor-2-hydroxypropyl-N,N,-diethyl-N-methylammoniumchlorid, 3-Chlor-2-hydroxypropyl-N,N,-dimethyl-N-benzylammoniumchlorid und Mischungen davon.

15. Kationische Celluloseregeneratfaser nach Anspruch 14, wobei die 3-Halogen-2-hydroxyalkyl-N,N,N-tri-alkyl- oder Aryl-substituierte Ammoniumverbindung 3-Chlor-2-hydroxypropyltrimethylammoniumchlorid ist.

## Revendications

1. Procédé de production continue d'une fibre cellulosique régénérée de manière cationique, ledit procédé comprenant les étapes de :
(a) pourvoi d'une fibre cellulosique régénérée humide ;
(b) traitement de ladite fibre cellulosique régénérée par une solution basique d'un composé de type ammonium substitué par 3-halogéno-2-hydroxyalkyl-N,N,N-tri-alkyle ou aryle répondant à la formule générale I, ou d'un sel de celui-ci tout en maintenant un pH d'environ 9 à 13 : 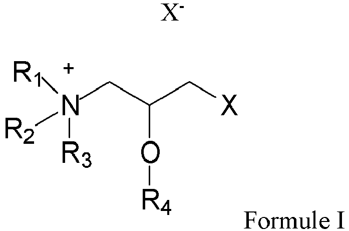 dans lequel
X représente un halogène choisi dans un groupe constitué par le chlorure et le bromure ;
R1, R2, R3, sont individuellement choisis dans un groupe constitué par les groupements alkyle en C1-C4, benzyle et benzyle substitués ; et
R4 représente un hydrogène ;
(c) soumission de la fibre cellulosique régénérée traitée à une étape de régulation d'humidité de telle sorte que la teneur en humidité dans la fibre cellulosique traitée ne dépasse pas 120 % en masse de la fibre cellulosique traitée ; et
(d) durcissement de la fibre cellulosique traitée à une température comprise entre 100 °C et 145 °C, pour obtenir une fibre cellulosique régénérée qui est modifiée de manière cationique par un composé de type ammonium substitué par 3-halogéno-2-hydroxyalkyl-N,N,N-tri-alkyle ou aryle répondant à la formule I, ou un sel de celui-ci dans une proportion comprise entre 1,5 et 33 % en masse.

2. Procédé selon la revendication 1, dans lequel le composé de type ammonium substitué par 3-halogéno-2-hydroxyalkyl-N,N,N-tri-alkyle ou aryle est choisi dans un groupe constitué par le chlorure de 3-chloro-2-hydroxypropyltriméthylammonium, le bromure de 3-chloro-2-hydroxypropyl- N,N,N-triméthylammonium, le chlorure de 3-chloro-2-hydroxypropyl-N,N,-diéthyl-N-méthylammonium, le chlorure de 3-chloro-2-hydroxypropyl-N,N,-diméthyl-N-benzylammonium et les mélanges de ceux-ci.

3. Procédé selon la revendication 2, dans lequel le composé de type ammonium substitué par 3-halogéno-2-hydroxyalkyl-N,N,N-tri-alkyle ou aryle est le chlorure de 3-chloro-2-hydroxypropyl-triméthylammonium.

4. Procédé selon l'une quelconque des revendications précédentes, dans lequel ladite solution basique d'un composé de type ammonium substitué par 3-halogéno-2-hydroxyalkyl-N,N,N-tri-alkyle ou aryle est appliquée à la fibre cellulosique régénérée humide dans une proportion comprise entre environ 15 et 30 % en masse de la fibre cellulosique.

5. Procédé selon l'une quelconque des revendications précédentes, dans lequel ladite solution basique d'un composé de type ammonium substitué par 3-halogéno-2-hydroxyalkyl-N,N,N-tri-alkyle ou aryle a une concentration en composé de type ammonium substitué par 3-halogéno-2-hydroxyalkyl-N,N,N-tri-alkyle ou aryle comprise entre environ 13 et 26 %.

6. Procédé selon l'une quelconque des revendications précédentes, dans lequel ladite solution basique comprend une base choisie dans un groupe constitué par l'hydroxyde de sodium, l'hydroxyde de potassium et le carbonate de sodium.

7. Procédé selon l'une quelconque des revendications précédentes, dans lequel la solution basique d'un composé de type ammonium substitué par 3-halogéno-2-hydroxyalkyl-N,N,N-tri-alkyle ou aryle est maintenue à une température comprise entre environ 10 et 50 °C.

8. Procédé selon l'une quelconque des revendications précédentes, dans lequel la fibre cellulosique régénérée humide est traitée par la solution basique d'un composé de type ammonium substitué par 3-halogéno-2-hydroxyalkyl-N,N,N-tri-alkyle ou aryle pendant une durée de moins de 10 minutes.

9. Procédé selon l'une quelconque des revendications précédentes, dans lequel le durcissement de la fibre cellulosique régénérée traitée est mis en oeuvre à une température comprise entre environ 110 et 135 °C.

10. Procédé selon l'une quelconque des revendications précédentes, dans lequel la fibre cellulosique régénérée humide est une fibre cellulosique régénérée jamais séchée obtenue par filage d'une solution cellulosique à travers une filière dans un bain de régénération et lavage de la fibre cellulosique régénérée.

11. Procédé selon l'une quelconque des revendications précédentes, dans lequel la fibre cellulosique régénérée humide est obtenue par ré-humidification d'une fibre cellulosique régénérée séchée.

12. Procédé selon l'une quelconque des revendications précédentes, dans lequel la fibre cellulosique régénérée humide est choisie dans un groupe constitué par une fibre de viscose discontinue, une fibre modale, une fibre de lyocell et les mélanges de celles-ci et/ou la fibre cellulosique régénérée humide est déposée sur un lit mobile.

13. Fibre cellulosique régénérée cationique comprenant une fibre cellulosique régénérée modifiée de manière cationique par 1,5 à 33 % en masse de composé de type ammonium substitué par 3-halogéno-2-hydroxyalkyl-N,N,N-tri-alkyle ou aryle répondant à la formule (I), ou d'un sel de celui-ci : 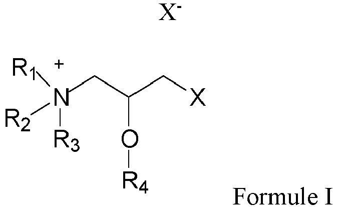 dans lequel
X représente un halogène choisi dans un groupe constitué par le chlorure et le bromure ;
R1, R2, R3, sont individuellement choisis dans un groupe constitué par des groupements alkyle en C1-C4, benzyle et benzyle substitués ; et
R4 représente un hydrogène.

14. Fibre cellulosique régénérée cationique selon la revendication 14, dans lequel le composé de type ammonium substitué par 3-halogéno-2-hydroxyalkyl-N,N,N-tri-alkyle ou aryle est choisi dans un groupe constitué par le chlorure de 3-chloro-2-hydroxypropyltriméthylammonium, le bromure de 3-chloro-2-hydroxypropyl-N,N,N-triméthylammonium, le chlorure de 3-chloro-2-hydroxypropyl-N,N,-diéthyl-N-méthylammonium, le chlorure de 3-chloro-2-hydroxypropyl-N,N,-diméthyl-N-benzylammonium et les mélanges de ceux-ci.

15. Fibre cellulosique régénérée cationique selon la revendication 14, dans lequel le composé de type ammonium substitué par 3-halogéno-2-hydroxyalkyl-N,N,N-tri-alkyle ou aryle est le chlorure de 3-chloro-2-hydroxypropyl-triméthylammonium.
